# EUROPEAN PATENT APPLICATION

(11) **EP 4 844 394 A1**
(43) Date of publication of application: **25.11.2026**
(21) Application number: 25881306.2
(22) Date of filing: 17.07.2025
(51) Int. Cl.: G01N 27/82

(54) **FPGA-BASED METHOD AND DEVICE FOR SURFACE DEFECT DETECTION OF SURFACED WORKPIECE**

(30) Priority: 08.11.2024 CN 202411600782
(71) Applicant: China Nuclear Power Engineering Co., Ltd., Shenzhen, Guangdong 518116 (CN); China University Of Petroleum East China, Qingdao, Shandong 266000 (CN)
(72) Inventor: LI, Yuwei, Shenzhen, Guangdong 518116 (CN); YUAN, Xinan, Shenzhen, Guangdong 518116 (CN); ZHU, Congbin, Shenzhen, Guangdong 518116 (CN); LI, Wei, Shenzhen, Guangdong 518116 (CN); ZOU, Guowei, Shenzhen, Guangdong 518116 (CN); YIN, Xiaokang, Shenzhen, Guangdong 518116 (CN); ZHAO, Jianming, Shenzhen, Guangdong 518116 (CN); LI, Xiao, Shenzhen, Guangdong 518116 (CN); BIAN, Xudong, Shenzhen, Guangdong 518116 (CN); ZHAO, Jianchao, Shenzhen, Guangdong 518116 (CN); DING, Jianxi, Shenzhen, Guangdong 518116 (CN); WANG, Xiangyang, Shenzhen, Guangdong 518116 (CN); CHEN, Qinyu, Shenzhen, Guangdong 518116 (CN); WU, Weibang, Shenzhen, Guangdong 518116 (CN); LI, Jiakang, Shenzhen, Guangdong 518116 (CN); HUANG, Qinghui, Shenzhen, Guangdong 518116 (CN); WANG, Cheng, Shenzhen, Guangdong 518116 (CN); LI, Dong, Shenzhen, Guangdong 518116 (CN)
(74) Representative: Westphal, Mussgnug & Partner, Patentanwälte mbB
(86) International application number: PCT/CN2025/109138
(87) International publication number: WO 2026/086298

(57) **Abstract**

The present invention relates to a method and a device for detecting a surface defect of surfacing workpiece based on FPGA. The method comprises: acquiring a magnetic induction data matrix; performing lock-in amplification on the magnetic induction data matrix to obtain an original feature data matrix; performing convolution filtering on the original feature data matrix to obtain a smoothed feature data matrix; performing binarization processing on the smoothed feature data matrix to obtain a binarized data matrix; determining whether a magnetic field distortion exists on the surface of the surfacing workpiece based on the binarized data matrix; when the magnetic field distortion exists on the surface of the surfacing workpiece, determining whether the magnetic field distortion is caused by a workpiece surface defect, and outputting a detection report based on the determination result. The present invention implements defect detection using hardware, fully leverages the advantage of FPGA's strong computing capability, and significantly improves the efficiency of defect detection.

## Description

### TECHNICAL FIELD

The present invention relates to the technical field of defect detection, and in particular, to a method and a device for surface defect detection of a surfacing workpiece based on FPGA.

### DESCRIPTION OF RELATED ART

In nuclear power plants, many structural components require hardfacing welding to achieve mechanical connections. However, during the welding process, various factors (such as temperature gradients, material in homogeneity, etc.) may lead to surface defects like cracks and pores in a surfacing workpiece. These defects can severely impact the performance and service life of the workpiece. Therefore, the detection of surface defects on a surfacing workpiece has become an indispensable step.

In related technologies, a defect detection device primarily include: 1. A Single-array probe defect detection device, which require repeated scanning of the workpiece surface to complete the inspection, resulting in very low detection efficiency. 2. A Multi-array probes defect detection device, whose efficiency is higher than that of a single-array probe, is still limited by detection model typically implemented in software. The complex algorithm leads to relatively low detection efficiency, and when processing multi-channel sensor data, defect identification often experiences delays, causing detection data to stutter and failing to meet the efficient, real-time inspection requirements for a surfacing workpiece.

### BRIEF SUMMARY OF THE INVENTION

The technical problem to be solved by the present invention is to provide a method and a device for surface defect detection of a surfacing workpiece based on FPGA.

The technical solution adopted by the present invention to solve its technical problem is to construct a method for surface defect detection of a surfacing workpiece based on FPGA, comprising:
Acquiring a magnetic induction data matrix; wherein the magnetic induction data matrix comprises magnetic induction signals output by N alternating current field detection probes scanning the surface of a surfacing workpiece M times, with N and M being positive integers;
Performing lock-in amplification on the magnetic induction data matrix to obtain an original feature data matrix;
Performing convolution filtering on the original feature data matrix to obtain a smoothed feature data matrix;
Performing binarization processing on the smoothed feature data matrix to obtain a binarized data matrix;
Determining whether a magnetic field distortion exists on the surface of the surfacing workpiece based on the binarized data matrix;
when a magnetic field distortion exists on the surface of the surfacing workpiece, determining whether the magnetic field distortion is caused by a workpiece surface defect, and outputting a detection report based on the determination result.

Preferably, the step of performing lock-in amplification on the magnetic induction data matrix comprises:
Obtaining reference signal design parameters, wherein the reference signal design parameters include a reference signal amplitude and a reference signal angular frequency;
Determining a first reference signal expression and a second reference signal expression based on the reference signal design parameters;
For each magnetic induction signal included in the magnetic induction data matrix, performing the following operations respectively: calculating the product of the magnetic induction signal with the first reference signal expression and the second reference signal expression, respectively, to obtain a first product expression and a second product expression; setting a cutoff frequency based on the excitation signal frequency of the alternating current electromagnetic field detection probe, to remove harmonic components and random noise components from the first product expression and the second product expression based on the cutoff frequency, thereby obtaining a first amplitude expression and a second amplitude expression; calculating a useful signal amplitude of the magnetic induction signal based on the first amplitude expression and the second amplitude expression;
All the useful signal amplitudes constitute the original feature data matrix.

Preferably, the first reference signal expression is: r₁(t) = Vᵣsin(ωᵣt + τ), wherein r₁(t) represents the first reference signal, Vᵣ represents the reference signal amplitude, ωᵣ represents the reference signal angular frequency, t represents time, and τ represents a time shift;
The second reference signal expression is: r₂(t) = Vᵣcos(ωᵣt + τ), wherein r₂(t) represents the second reference signal;
The magnetic induction signal expression is: X(t) = Asin(ωt + φ) + N(t), wherein X(t) represents the magnetic induction signal, A represents the amplitude of the magnetic induction signal, ω represents the angular frequency of the magnetic induction signal, φ represents the initial phase angle, and N(t) represents random noise.
Preferably, the reference signal angular frequency is equal to the excitation signal frequency;
The step of setting a cutoff frequency based on the excitation signal frequency of the alternating current electromagnetic field detection probe comprises:
   Setting the cutoff frequency to a frequency greater than one time and less than two times the excitation signal frequency.

Preferably, the step of performing convolution filtering on the original feature data matrix comprises:
Performing a matrix filtering operation on each useful signal amplitude included in the original feature data matrix based on a set convolution filter operator to obtain a plurality of smoothed feature data corresponding one-to-one to each useful signal amplitude;
Forming the smoothed feature data collectively using the smoothed feature data matrix;
Wherein the set convolution filter operator is expressed as: $\frac{1}{16} \times \left[\begin{matrix}1 & 2 & 1 \\ 2 & 4 & 2 \\ 1 & 2 & 1\end{matrix}\right]$.

Preferably, the step of performing binarization processing on the smoothed feature data matrix comprises:
Determining the ratio of the maximum smoothed feature data in the smoothed feature data matrix to a preset maximum value as a mapping ratio;
Performing mapping processing on each smoothed feature data based on the mapping ratio to obtain a plurality of mapping values corresponding one-to-one to each smoothed feature data;
For each mapping value, performing: determining whether the mapping value is greater than a set threshold; if yes, assigning a first set value to the mapping value; if not, assigning a second set value to the mapping value;
Recording each assigned mapping value as a binarized data;
Forming the binarized data matrix collectively from the binarized data .

Preferably, the step of performing binarization processing on the smoothed feature data matrix further comprises:
Performing erosion and dilation processing on each binarized data to form the binarized data matrix with the processed binarized data.

Preferably, the step of determining whether a magnetic field distortion exists based on the binarized data matrix comprises:
Determining whether the binarized data matrix includes at least one binarized data with a first set value, and if so, determining that a magnetic field distortion exists.

Preferably, the step of determining whether the magnetic field distortion is caused by a workpiece surface defect comprises:
Determining whether the magnetic field distortion is caused by a workpiece surface defect via a trained neural network module.
Preferably, the step of outputting a detection report based on the determination result comprises:
   When the magnetic field distortion is caused by a workpiece surface defect, mapping the smoothed feature data matrix to a color space to obtain a color magnetic field image of the surface of the surfacing workpiece;
   determining coordinates of a magnetic field distortion region in the binarized data matrix as superposition coordinates for a pre-selection box;
   Superimposing the pre-selection box onto the superposition coordinates of the color magnetic field image, and outputting the color magnetic field image with the superimposed pre-selection box.

Preferably, the step of mapping the smoothed feature data matrix to a color space comprises:
Respectively mapping each smoothed feature data included in the smoothed feature data matrix to RGB channels in the color space based on a preset mapping function, to obtain the color magnetic field image;
The mapping function comprises a red mapping function, a green mapping function, and a blue mapping function:
   ${f}_{R} = \left\{\begin{matrix}\frac{1}{128} {x}^{2} , & 0 < x < 128 \\ - \frac{1}{32} {x}^{2} + 12 x - 896 , & 128 \leq x < 256\end{matrix}\right. ;$
   ${f}_{G} = \left\{\begin{matrix}\frac{1}{32} {x}^{2} , & 0 < x < 64 \\ - \frac{1}{32} {x}^{2} + 8 x - 256 , & 64 \leq x < 192 \\ \frac{1}{32} {x}^{2} - 16 x + 2048 , & 192 \leq x < 256\end{matrix}\right. ;$
   ${f}_{B} = \left\{\begin{matrix}- \frac{1}{32} {x}^{2} + 4 x + 128 , & 0 < x < 128 \\ \frac{1}{128} {x}^{2} - 4 x + 512 , & 128 \leq x < 256\end{matrix}\right. ;$

Among them, f_{R} represents the red mapping function, f_{G} represents the green mapping function, f_{B} represents the blue mapping function, and x represents the smoothed feature data.

The present invention also constructs a device for surface defect detection of a surfacing workpiece, comprising an FPGA and N alternating current electromagnetic field detection probes;
Each of the alternating current electromagnetic field detection probes is configured to scan the surface of the surfacing workpiece M times and output a corresponding magnetic induction signal after each scan; N and M are positive integers;
The FPGA comprises a lock-in amplification module, a convolution filtering module, a binary morphological filtering module, and a determination module;
The lock-in amplification module is configured to perform lock-in amplification on the magnetic induction signal output by each of the alternating current electromagnetic field detection probes to output an original feature data matrix;
The convolution filtering module is configured to perform convolution filtering processing on the original feature data matrix to output a smoothed feature data matrix;
The binary morphological filtering module is configured to perform binarization processing on the smoothed feature data matrix to output a binarized data matrix;
The determination module is configured to determine whether a magnetic field distortion exists based on the binarized data matrix, and when the magnetic field distortion exists, to determine whether the magnetic field distortion is caused by a workpiece surface defect, so as to output a detection report based on the determination result.

Preferably, the determination module comprises a neural network module, a pseudo-color imaging module, and a pre-selection box processing module;
The neural network module is configured to determine whether a magnetic field distortion exists based on the binarized data matrix, and, upon confirming the existence of the magnetic field distortion, determine whether the magnetic field distortion is caused by a workpiece surface defect;
The pseudo-color imaging module is configured to, when the magnetic field distortion is caused by a workpiece surface defect, map the smoothed feature data matrix to a color space to output a color magnetic field image of the surface of the surfacing workpiece;
The pre-selection box processing module is configured to determine coordinates of a magnetic field distortion region in the binarized data matrix as superposition coordinates for a pre-selection box, and, when the magnetic field distortion exists in the binarized data matrix, superimpose the pre-selection box onto the superposition coordinates of the color magnetic field image before the pseudo-color imaging module outputs the color magnetic field image.
Preferably, the FPGA further comprises a signal generation module for outputting an excitation digital signal;
The device for surface defect detection of a surfacing workpiece further comprises a signal processing module, an interface module, an AD sampling module, a DA conversion module, and an excitation module;
The signal processing module is connected to each of the alternating current electromagnetic field detection probes to amplify and filter the magnetic induction signals output by each of the alternating current electromagnetic field detection probes;
The interface module is connected to the signal processing module, the AD sampling module, the DA conversion module, and the excitation module to transmit the amplified and filtered magnetic induction signals to the AD sampling module;
The AD sampling module is connected to the lock-in amplification module to convert a magnetic induction signal from the interface module into a digital signal and send the converted magnetic induction signal to the lock-in amplification module;
The DA conversion module is connected to the signal generation module to convert the excitation digital signal into an analog signal and send the converted excitation digital signal to the interface module;
The excitation module is configured to generate, based on the excitation digital signal from the interface module, an excitation signal capable of driving each of the alternating current electromagnetic field detection probes to operate.

Preferably, the device for surface defect detection of a surfacing workpiece further comprises a TMR magnetic sensor for detecting the angle between the detection direction of each of the alternating current electromagnetic field detection probes and the surface of the surfacing workpiece.

Implementing the present invention provides the following beneficial effects: a method for surface defect detection of a surfacing workpiece based on FPGA is provided. Through the FPGA, the magnetic induction data matrix sequentially undergoes processing such as lock-in amplification, convolution filtering, binarization processing, and defect determination, thereby implementing defect detection using hardware. This fully leverages the advantage of the FPGA's strong computing capability and significantly improves the efficiency of defect detection.

### BRIEF DESCRIPTION OF THE SEVERAL VIEWS OF THE DRAWINGS

The present invention will be further described below with reference to the accompanying drawings and embodiments, in which:
FIG. 1 is a program flowchart of a method for surface defect detection of a surfacing workpiece based on FPGA according to some embodiments of the present invention;
FIG. 2 is a schematic diagram showing a surface defect on a surfacing workpiece according to some embodiments of the present invention;
FIG. 3 is a grayscale image of an original feature data matrix obtained after performing lock-in amplification on the magnetic induction data matrix in the embodiment of FIG. 2;
FIG. 4 is a grayscale image of a smoothed feature data matrix obtained after performing convolution filtering on the original feature data matrix in the embodiment of FIG. 3;
FIG. 5 is a grayscale image of a binarized data matrix obtained after performing binarization processing on the smoothed feature data matrix in the embodiment of FIG. 4;
FIG. 6 is a circuit block diagram of a device for surface defect detection of a surfacing workpiece according to some embodiments of the present invention;
FIG. 7 is a schematic diagram of a high-resolution detection array composed of alternating current electromagnetic field detection probes according to some embodiments of the present invention;
FIG. 8 is a circuit block diagram of a lock-in amplifier according to some embodiments of the present invention.

### DETAILED DESCRIPTION OF THE INVENTION

In order to provide a clearer understanding of the technical features, objectives, and effects of the present invention, the specific embodiments of the invention are described in detail below with reference to the accompanying drawings.

It should be noted that the flowcharts shown in the accompanying drawings are for illustrative purposes only and are not required to include all content and operations/steps, nor must they be executed in the described order. For example, some operations/steps may be further decomposed, while others may be combined or partially combined; therefore, the actual execution order may vary according to specific circumstances.

The block diagrams shown in the accompanying drawings are merely functional entities and do not necessarily correspond to physically independent entities. That is, these functional entities may be implemented in software form, or in one or more hardware modules or integrated circuits, or across different networks and/or processor devices and/or microcontroller devices.

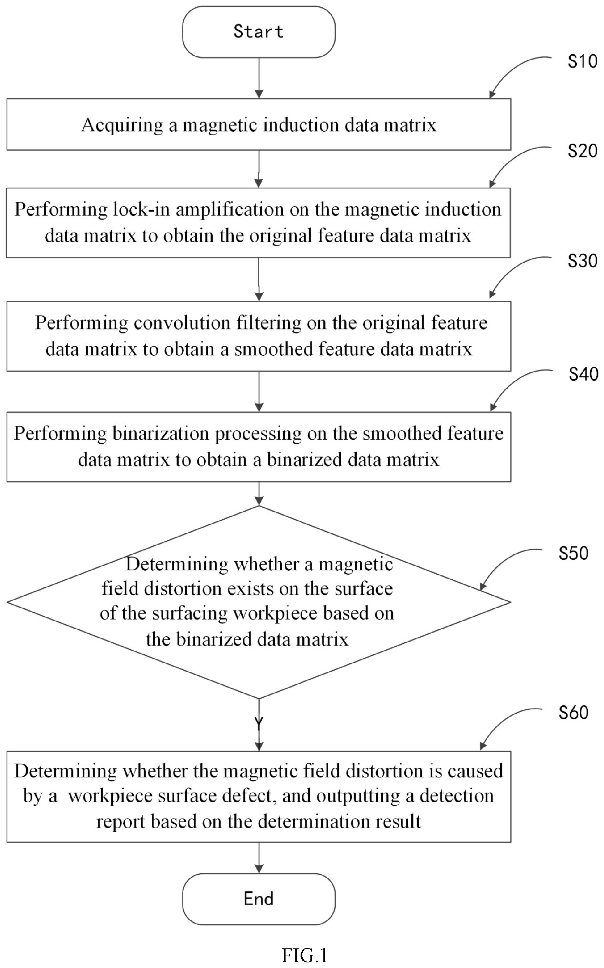

The present invention provides a method for surface defect detection of a surfacing workpiece based on FPGA, wherein the FPGA is applied to a device for surface defect detection of a surfacing workpiece, enabling efficient surface defect detection on such workpieces. As shown in FIG. 1, the method for surface defect detection of a surfacing workpiece may include step S10, step S20, step S30, step S40, step S50, and step S60.

Step S10 includes: acquiring a magnetic induction data matrix; wherein the magnetic induction data matrix comprises magnetic induction signals output by N alternating current electromagnetic field detection probes scanning the surface of the surfacing workpiece M times, with N and M being positive integers. In this step, each alternating current electromagnetic field detection probe 104 outputs a magnetic induction signal each time it scans the surface of the surfacing workpiece, meaning the magnetic induction data matrix includes all magnetic induction signals respectively output by all alternating current electromagnetic field detection probes after a plurality of scans of the surface of the surfacing workpiece. It should be noted that the magnetic induction signal is a voltage signal, and the magnitude of the magnetic induction intensity detected by the alternating current electromagnetic field detection probe 104 can be characterized based on its voltage value. Furthermore, the alternating current electromagnetic field detection probes can be arranged in an array to form a high-resolution detection array, such as in a J*K configuration, where J*K is equal to N.

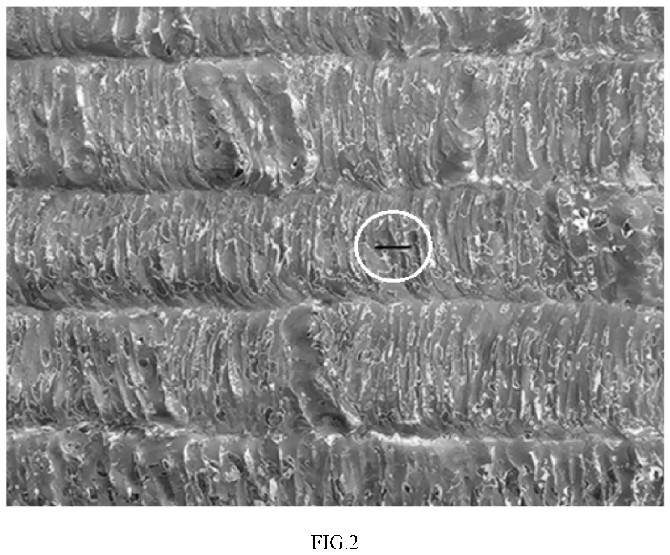

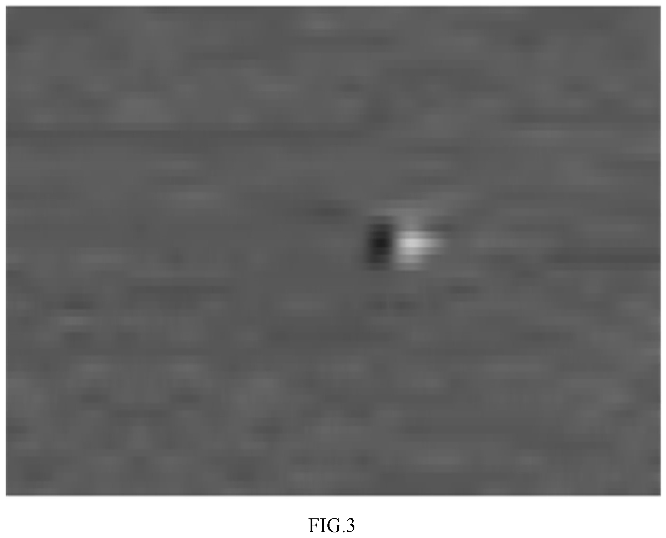

Step S20 includes: performing lock-in amplification on the magnetic induction data matrix to obtain the original feature data matrix. The purpose of this step is to perform lock-in processing on the magnetic induction data matrix based on a set frequency, thereby filtering out components in the magnetic induction data matrix that are not at the set frequency and improving the signal-to-noise ratio. Please refer to FIG. 2 and FIG. 3. FIG. 2 is a schematic diagram of surface defects on a surfacing workpiece in some embodiments, where the circled position in the illustration correspond to the location of a surface defect. FIG. 3 is a grayscale image of the original feature data matrix obtained after performing lock-in amplification on the magnetic induction data matrix from the embodiment in FIG. 2. Comparing FIG. 2 and FIG 3, it can be seen that after performing lock-in amplification on the magnetic induction data matrix, the surface defects have become initially apparent. However, there are still many noise points in the image of FIG. 2, and the risk of misidentifying the defect locations (i.e., defect coordinates) is relatively high.

In some embodiments, the step of performing lock-in amplification on the magnetic induction data matrix may include step S201, step S202, step S203, and step S204.

Step S201 includes: obtaining reference signal design parameters, wherein the reference signal design parameters include a reference signal amplitude and a reference signal angular frequency. Since the frequency of the useful signal within each magnetic induction signal included in the magnetic induction data matrix is theoretically similar to the frequency of the excitation signal that drives the alternating current electromagnetic field detection probe, it is preferable to set the reference signal angular frequency equal to the frequency of the excitation signal. Additionally, the angular frequency of the magnetic induction signal can also be considered equal to the frequency of the excitation signal.

Step S202 includes: determining a first reference signal expression and a second reference signal expression based on the reference signal design parameters. In this step, the first reference signal expression can be expressed as: r₁(t) = Vᵣsin(ωᵣt + τ), where r₁(t) represents the first reference signal, Vᵣ represents the reference signal amplitude, ωᵣ represents the reference signal angular frequency, t represents time, and τ represents a time shift. The second reference signal expression can be expressed as: r₂(t) = Vᵣcos(ωᵣt + τ) where r₂(t) represents the second reference signal.

Step S203 includes calculating the products of the magnetic induction signal with the first reference signal expression and the second reference signal expression respectively for each magnetic induction signal included in the magnetic induction data matrix to obtain a first product expression and a second product expression; setting a cutoff frequency based on the excitation signal frequency of the alternating current electromagnetic field detection probe, to remove harmonic components and random noise components from the first product expression and the second product expression based on the cutoff frequency, thereby obtaining a first amplitude expression and a second amplitude expression, calculating a useful signal amplitude of the magnetic induction signal based on the first amplitude expression and the second amplitude expression.

In this step, the magnetic induction signal expression can be: X(t) = Asin(ωt + φ) + N(t) where X(t) represents the magnetic induction signal, A represents the amplitude of the magnetic induction signal, ω represents the angular frequency of the magnetic induction signal, and N(t) represents random noise. Furthermore, the first product expression can be expressed as: ${μ}_{1} = \frac{{AV}_{r}}{2} cos \left[\left(ω-{ω}_{r}\right)t+\left(φ-τ\right)\right] - \frac{{AV}_{r}}{2} cos \left[\left(ω+{ω}_{r}\right)t+\left(φ+τ\right)\right] + {V}_{r} N \left(t\right) sin \left({ω}_{r}t+τ\right)$, where µ ₁represents the first product, $\frac{{AV}_{r}}{2} cos \left[\left(ω+{ω}_{r}\right)t+\left(φ+τ\right)\right]$ represents the harmonic components, and VᵣN(t)sin(ωᵣt + τ) represents the random noise components. The second product expression can be expressed as: ${μ}_{2} = \frac{{AV}_{r}}{2} sin \left[\left(ω-{ω}_{r}\right)t+\left(φ-τ\right)\right] - \frac{{AV}_{r}}{2} sin \left[\left(ω+{ω}_{r}\right)t+\left(φ+τ\right)\right] + {V}_{r} N \left(t\right) cos \left({ω}_{r}t+τ\right)$ , where µ₂ represents the second product, $\frac{{AV}_{r}}{2} sin \left[\left(ω+{ω}_{r}\right)t+\left(φ+τ\right)\right]$ represents the harmonic component in the second product expression, and VᵣN(t)cos(ωᵣt + τ) represents the random noise component. The expression for the useful signal amplitude can be: $A = 2 \times \sqrt{{{μ}_{out 1}}^{2} + {{μ}_{out 1}}^{2}}$, where A represents the useful signal amplitude, µₒᵤₜ₁ represents the first amplitude, and µₒᵤₜ₂ represents the first amplitude.

In some embodiments, the cutoff frequency can be set to a frequency greater than one time and less than two times the excitation signal frequency, while also setting Vᵣ = 1 and ω = ωᵣ. Accordingly, the step of removing harmonic components and random noise components from the first product expression and the second product expression based on the cutoff frequency includes: removing the signal components outside the cutoff frequency in the first product expression and the second product expression. Specifically, taking the first product expression as an example, the harmonic component in the first product expression can be expressed as: $\frac{A}{2} cos \left[2ωt+\left(φ+τ\right)\right]$, meaning the angular frequency of the harmonic component is 2ω. The random noise component in the first product expression can be expressed as VᵣN(t)cos(ωt + τ), meaning the angular frequency of the random noise component is ω. Since ω = 2πf (where f denotes the excitation signal frequency), setting the cutoff frequency to a frequency greater than one time and less than two times the excitation signal frequency is equivalent to directly removing signals from the first product expression with angular frequencies not greater than ω and not less than 2ω (based on ω = 2πf), thereby removing the harmonic component and the random noise component from the first product expression. Thus, the first amplitude expression obtained after removing the harmonic component and random noise component from µ₁ can be expressed as: ${μ}_{out 1} = \frac{A}{2} cos \left(φ-τ\right)$. Similarly, the second amplitude expression obtained after removing the harmonic component and random noise component from µ₂ can be expressed as: ${μ}_{out 2} = \frac{A}{2} sin \left(φ-τ\right)$.

Step S204 includes: forming the original feature data matrix using the useful signal amplitude values.

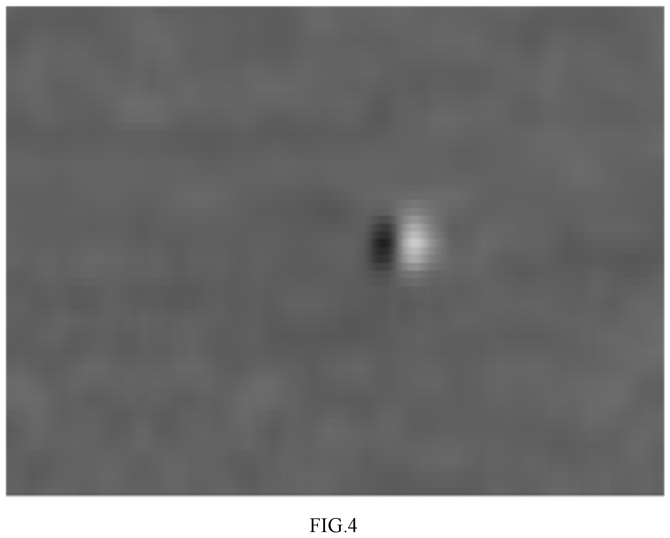

Step S30 includes: performing convolution filtering on the original feature data matrix to obtain a smoothed feature data matrix. The purpose of this step is to further filter out noise from the original feature data, making the original feature data matrix smoother to extract the feature signals within it. Please refer to FIG. 3 and FIG. 4. FIG. 4 is a grayscale image of the smoothed feature data matrix obtained after performing convolution filtering on the original feature data matrix in the embodiment of FIG. 3. By comparing FIG. 4 and FIG. 3, it can be seen that after convolution filtering, most of the noise surrounding the defect is filtered out, making the characteristics of the defect area more prominent.

In some embodiments, the step of performing convolution filtering on the original feature data matrix may include step S301 and step S302.

Step S301 includes: performing a matrix filtering operation on each of the useful signal amplitudes included in the original feature data matrix based on a set convolution filter operator, to obtain a plurality of smoothed feature data corresponding one-to-one to each useful signal amplitude. Here, the set convolution filter operator can be expressed as: $\frac{1}{16} \times \left[\begin{matrix}1 & 2 & 1 \\ 2 & 4 & 2 \\ 1 & 2 & 1\end{matrix}\right]$.

Step S302 includes: forming the smoothed feature data matrix using each smoothed feature data.

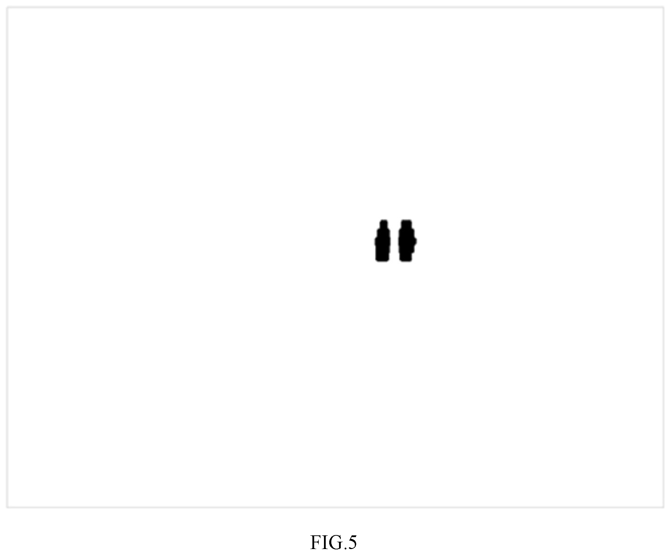

Step S40 includes: performing binarization processing on the smoothed feature data matrix to obtain a binarized data matrix. Please refer to FIG. 5, which is a grayscale image of the binarized data matrix obtained after binarization processing on the smoothed feature data matrix in the embodiment of FIG. 4. By comparing FIG. 4 and FIG. 5, it can be seen that after binarization processing, the binarized data matrix can very prominently display the defect regions in the grayscale image.

In some embodiments, the step of performing binarization processing on the smoothed feature data matrix may include step S401, step S402, step S403, step S404, and step S405.

Step S401 includes: determining the ratio of the maximum smoothed feature data in the smoothed feature data matrix to a preset maximum value as a mapping ratio.

Step S402 includes: performing mapping processing on each smoothed feature data included in the smoothed feature data matrix based on a mapping ratio to obtain a plurality of mapping values corresponding one-to-one to each smoothed feature data. In this step, assuming the maximum smoothed feature data is A, and the preset maximum value is B, then the mapping ratio is equal to A/B. Let the smoothed feature data be C, then the mapping value after performing mapping processing on each smoothed feature data can be expressed as: D = C/(A/B) = C * B/A, where D represents the mapping value.

Furthermore, the preset maximum value can be set to 255. Mapping the smoothed feature data matrix based on the mapping ratio is equivalent to mapping the smoothed feature data matrix to a lookup table with a depth of 256 based on a certain proportion, thereby obtaining a plurality of mapping values.

Step S403 includes: For each mapping value, performing the following: determining whether the mapping value is greater than a set threshold. If yes, assigning a first set value to the mapping value; if not, assign a second set value to the mapping value. Here, the first set value can be a logical "1", and the second set value can be a logical "0". The set threshold can be customized based on requirements. It should be noted that the sensitivity of defect detection is positively correlated with the size of the set threshold.

Step S404 includes: recording each assigned mapping value as a binarized data.

Step S405 includes: forming the binarized data matrix using the binarized data.

To eliminate noise potentially caused by the binarization threshold, in some embodiments, prior to step S405, the method may further include: performing erosion and dilation processing on each binarized data, and subsequently forming the binarized data matrix using the processed binarized data. Here, the erosion and dilation processing can be implemented using existing erosion and dilation algorithms.

Step S50 includes: determining whether a magnetic field distortion exists on the surface of the surfacing workpiece based on the binarized data matrix. Specifically, determining the existence of magnetic field distortion based on the binarized data matrix may include: determining whether the binarized data matrix includes at least one binarized data with a first set value; when the binarized data matrix includes at least one binarized data with the first set value, determining that a magnetic field distortion exists on the surface of the surfacing workpiece; and when the binarized data matrix does not contain any binarized data with the first set value, determining that no magnetic field distortion exists on the surface of the surfacing workpiece.

Step S60 includes: when there is a magnetic field distortion on the surface of the surfacing workpiece, determining whether the magnetic field distortion is caused by a workpiece surface defect, and outputting a detection report based on the determination result.

In some embodiments, the step of determining whether the magnetic field distortion is caused by a workpiece surface defect may include: determining, via a trained neural network module, whether the magnetic field distortion is caused by a workpiece surface defect. The training process of the neural network module may include: establishing a learning model based on a neural network algorithm; obtaining training samples (including a plurality of first samples where magnetic field distortion is caused by a workpiece surface defect and a plurality of second samples where magnetic field distortion is not caused by workpiece)surface defects to train the learning model using the training samples, thereby obtaining the neural network module capable of determining whether the magnetic field distortion is caused by a workpiece surface defect. Of course, to improve the determination accuracy of the neural network module, parameters such as the hyperparameters of the neural network module can also be adjusted as needed.

In some embodiments, the step of outputting a detection report based on the determination result may include step S601, step S602, and step S603.

Step S601 includes: when the magnetic field distortion is caused by a workpiece surface defect, mapping the smoothed feature data matrix to a color space to obtain a color magnetic field image of the surface of the surfacing workpiece.

In some embodiments, the step of mapping the smoothed feature data matrix to a color space may include: respectively mapping each smoothed feature data included in the smoothed feature data matrix to the RGB channels in the color space based on a preset mapping function, to obtain a color magnetic field image.

Herein, the mapping function may include a red mapping function, a green mapping function, and a blue mapping function, and are respectively expressed as:
${f}_{R} = \left\{\begin{matrix}\frac{1}{128} {x}^{2} , & 0 < x < 128 \\ - \frac{1}{32} {x}^{2} + 12 x - 896 , & 128 \leq x < 256\end{matrix}\right. ;$
${f}_{G} = \left\{\begin{matrix}\frac{1}{32} {x}^{2} , & 0 < x < 64 \\ - \frac{1}{32} {x}^{2} + 8 x - 256 , & 64 \leq x < 192 \\ \frac{1}{32} {x}^{2} - 16 x + 2048 , & 192 \leq x < 256\end{matrix}\right. ;$
${f}_{B} = \left\{\begin{matrix}- \frac{1}{32} {x}^{2} + 4 x + 128 , & 0 < x < 128 \\ \frac{1}{128} {x}^{2} - 4 x + 512 , & 128 \leq x < 256\end{matrix}\right. ;$

Here, f_{R} denotes the red mapping function, f_{G} denotes the green mapping function, f_{B} denotes the blue mapping function, and x represents the smoothed feature data.

Step S602 includes: determining coordinates of a magnetic field distortion region in the binarized data matrix as superposition coordinates of the pre-selection box.

It should be noted that after sequentially performing lock-in amplification, convolution filtering, and binarization processing on the magnetic induction intensity data, a one-to-one correspondence still exists between the a plurality of binarized data included in the binarized data matrix and the a plurality of magnetic induction signals. Furthermore, since the determination of magnetic field distortion is made by determining whether a binarized data exists in the binarized data matrix, it can be understood that in this embodiment, the magnetic induction signals corresponding to all binarized data set to the first set value can actually be recorded as distortion signals. Moreover, the detection coordinates of the array formed by the alternating current electromagnetic field detection probes can be pre-recorded, meaning the area coordinates detected by each alternating current electromagnetic field detection probe are known. Additionally, because each magnetic induction signal corresponds one-to-one with each alternating current electromagnetic field detection probe, the detection area coordinates of the alternating current electromagnetic field detection probes respectively corresponding to each distortion signal can be determined as the superposition coordinates of the pre-selection box.

Step S603 includes: superimposing the pre-selection box onto the superposition coordinates of the color magnetic field image and outputting the color magnetic field image with the superimposed pre-selection box. Understandably, the purpose of the pre-selection box is to make the distorted magnetic field more conspicuous in the color magnetic field image, facilitating personnel in locating the actual position of defects on the surface of the surfacing workpiece based on the pre-selection box.

It should be noted that FPGA, or Field-Programmable Gate Array, can rely on hardware to implement parallel computing, offering the advantage of strong computational capability. Compared to dedicated chips, deploying neural networks using hardware provides higher operational efficiency than a software environment. The present invention simultaneously unifies and encapsulates various data matrix processing algorithms (including a magnetic induction data matrix, an original feature data matrix, a smoothed feature data matrix, and a binarized data matrix), realizing functions such as lock-in amplification, convolution filtering, neural network discrimination, and coordinate box selection through a single FPGA computing module. This leverages the advantage of hardware operational efficiency, significantly improving the efficiency of defect detection. Furthermore, FPGA also has advantages such as reduce hardware footprint and can provide the hardware foundation for real-time imaging in the present invention. Meanwhile, the various alternating current field detection probes in the present invention form an array. By employing a high-density and high-resolution sensor array, the device for surface defect detection of a surfacing workpiece can achieve defect image acquisition through a single scan, solving the problem of low efficiency in the repetitive scanning process of previous single-array probes.

Understandably, the technical solution of the present invention utilizes the FPGA to sequentially perform processing such as lock-in amplification, convolution filtering, binarization, and defect determination on the magnetic induction data matrix, thereby implementing defect detection using hardware. It fully leverages the advantage of FPGA's strong computational capability, significantly enhancing the efficiency of defect detection.

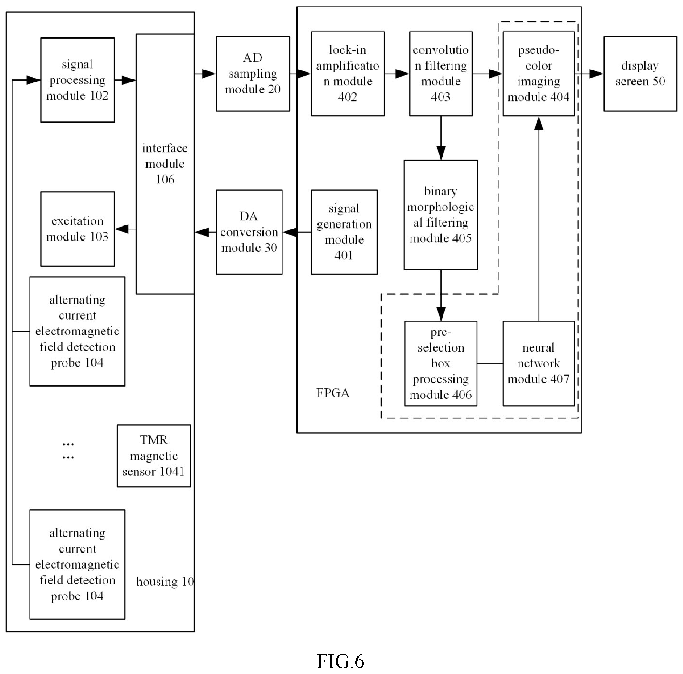

As shown in FIG. 6, the present invention also provides a device for surface defect detection of a surfacing workpiece. The device may include an FPGA and N alternating current electromagnetic field detection probes 104.

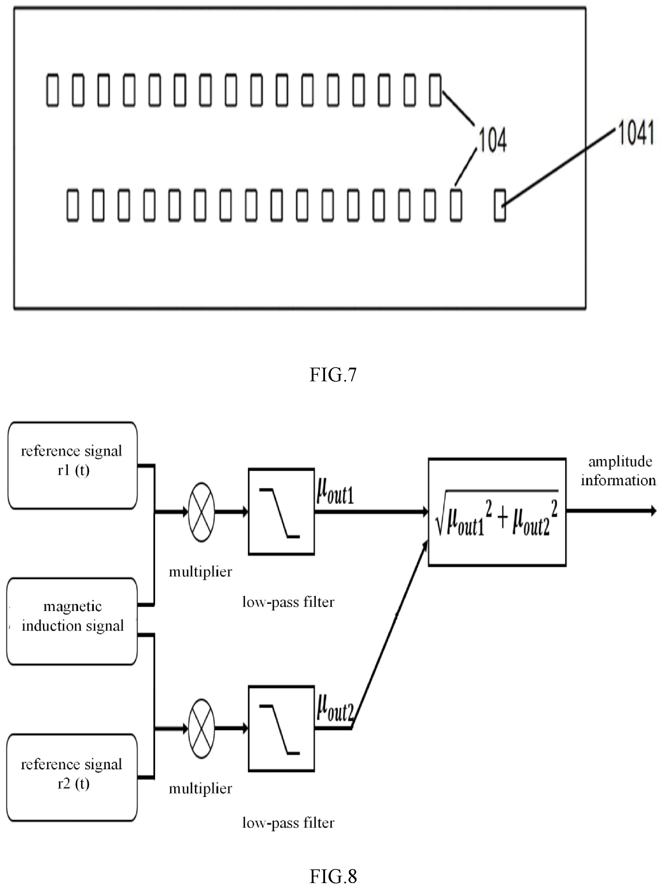

Each alternating current electromagnetic field detection probe 104 is configured to scan the surface of the surfacing workpiece M times and output a corresponding magnetic induction signal after each scan. N and M are positive integers, where N can be 32. Accordingly, the 32 alternating current electromagnetic field detection probes 104 can form a 2*16 high-resolution detection array as shown in FIG. 7.

As shown in FIG. 6, the FPGA includes a lock-in amplification module 402, a convolution filtering module 403, a binary morphological filtering module 405, and a determination module 410.

The lock-in amplification module 402 is configured to perform lock-in amplification on the magnetic induction signal output by the alternating current electromagnetic field detection probe 104 to output the original feature data matrix. Among them, the lock-in amplification module 402 can be a 32-channel orthogonal vector digital lock-in amplifier. The specific structure of the lock-in amplifier can be referred to in FIG. 8 and will not be elaborated here.

It should be noted that the specific process of lock-in amplification can be referred to in steps S201 to S204 provided by the embodiments of the present invention and will not be elaborated here.

The convolution filtering module 403 is configured to perform convolution filtering on the original feature data matrix to output a smoothed feature data matrix. It should be noted that the specific process of convolution filtering can be referred to in steps S301 and S302 provided by the embodiments of the present invention and will not be elaborated here.

The binary morphological filtering module 405 is configured to perform binarization processing on the smoothed feature data matrix to output a binarized data matrix. It should be noted that the specific process of binarization can refer to steps S401 to S405 provided in the embodiments of the present invention, which will not be repeated here.

The determination module 410 is configured to determine whether a magnetic field distortion exists based on the binarized data matrix, and to determine whether the magnetic field distortion is caused by a workpiece surface defect when it exists, in order to output a detection report based on the determination result. It determines whether the magnetic field distortion is caused by a workpiece surface defect and outputs a detection report based on the determination result.

In some embodiments, as shown in FIG. 6, the determination module 410 includes a neural network module 407, a pseudo-color imaging module 404, and a pre-selection box processing module 406.

The neural network module 407 is configured to determine whether magnetic field distortion exists based on the binarized data matrix, and to determine whether the magnetic field distortion is caused by a workpiece surface defect after confirming its existence. Here, the neural network module 407 is a pre-trained neural network module capable of determining whether magnetic field distortion is caused by a workpiece surface defect.

The pseudo-color imaging module 404 is configured to map the smoothed feature data matrix into a color space when magnetic field distortion is caused by a workpiece surface defect, in order to output a color magnetic field image of the surface of the surfacing workpiece. It should be noted that the specific steps for mapping the smoothed feature data matrix into the color space can be referred to the embodiments provided above, and will not be elaborated here.

The pre-selection box processing module 406 is configured to determine the coordinates of the magnetic field distortion region in the binarized data matrix as the superposition coordinates for the pre-selection box, and when a magnetic field distortion exists in the binarized data matrix, to superimpose the pre-selection box at the corresponding superposition coordinates on the color magnetic field image before the pseudo-color imaging module 404 outputs the color magnetic field image. It should be noted that the specific steps for determining the superposition coordinates of the pre-selection box can be referred to the embodiments provided above, and will not be elaborated here.

In some embodiments, as shown in FIG. 6, the FPGA may also include a signal generation module 401 for outputting an excitation digital signal. Specifically, the excitation digital signal can be a PWM signal with a certain frequency and/or a certain duty cycle, and the frequency or duty cycle of the PWM signal can control the frequency and/or amplitude of the excitation signal.

Correspondingly, as shown in FIG. 6, the device for surface defect detection of a surfacing workpiece may also include a signal processing module 102, an interface module 106, an AD sampling module 20, a DA conversion module 30, and an excitation module 103.

The signal processing module 102 is connected to each alternating current electromagnetic field detection probe 104 to perform amplification and filtering processing on each magnetic induction signal output by each alternating current electromagnetic field detection probe 104. Specifically, the signal processing module 102 can be an existing amplification and filtering circuit, whose function is to filter and amplify the magnetic induction signal output by each alternating current electromagnetic field detection probe 104, and send the filtered and amplified signal to the AD sampling module 20 via the interface module 106.

The interface module 106 is connected to the signal processing module 102, the AD sampling module 20, the DA conversion module 30, and the excitation module 103, in order to transmit the amplified and filtered magnetic induction signal to the AD sampling module 20. Specifically, the interface module 106 can be an existing LEMO connector, whose function is to establish electrical connections between the signal processing module 102, the AD sampling module 20, the DA conversion module 30, and the excitation module 103.

The AD sampling module 20 is connected to the lock-in amplification module 402, in order to convert the magnetic induction signal from the interface module 106 into a digital signal and transmit the converted magnetic induction signal to the lock-in amplification module 402. Specifically, as FPGAs are not conveniently capable of directly recognizing analog signals, correspondingly, the AD sampling module 20 can be an existing AD sampling circuit, capable of converting the magnetic induction signal from the interface module 106 from an analog signal to a digital signal, facilitating recognition by the FPGA.

The DA conversion module 30 is connected to the signal generation module 401, in order to convert the excitation digital signal into an analog signal and output the converted excitation digital signal to the interface module 106. Specifically, as FPGAs are not conveniently capable of directly outputting analog signals, correspondingly, the DA conversion module 30 can be an existing DA conversion circuit, capable of converting the excitation digital signal from the signal generation module 401 from a digital signal to an analog signal, facilitating recognition by the excitation module 103.

The excitation module 103 is configured to generate an excitation signal capable of driving the operation of each alternating current electromagnetic field detection probe 104 based on the excitation digital signal from the interface module 106. Specifically, the excitation module 103 can be an existing sine wave generation circuit, capable of generating an excitation signal with a set frequency and amplitude based on the excitation digital signal.

In some embodiments, as shown in FIG. 6, the device for surface defect detection of a surfacing workpiece may further include a TMR magnetic sensor 1041 configured to detect the angle between the detection direction of each alternating current electromagnetic field detection probe 104 and the surface of the surfacing workpiece. As shown in FIG. 7, the TMR magnetic sensor 1041 can be arranged on the detection array formed by the alternating current electromagnetic field detection probes 104. The TMR magnetic sensor 1041 is connected to the FPGA via the interface module 106 to generate a TMR signal characterizing the magnitude of this angle based on the angle between the detection array and the surface of the surfacing workpiece. Correspondingly, the FPGA may also include a probe direction sensing module. The probe direction sensing module is configured to determine, based on the TMR signal, whether the detection direction of each alternating current electromagnetic field detection probe 104 (i.e., the detection array) is perpendicular to the surface of the surfacing workpiece, and to output a prompt signal when the detection direction of any alternating current electromagnetic field detection probe 104 is not perpendicular to the workpiece surface. This prompts the user to adjust the direction of the alternating current electromagnetic field detection probes 104 to ensure that the magnetic field direction emitted by the probes is perpendicular to the surface of the surfacing workpiece, which helps improve detection accuracy.

In some embodiments, as shown in FIG. 6, the device for surface defect detection of a surfacing workpiece may further comprise a housing 10 for accommodating the signal processing module 102, the interface module 106, the excitation module 103, the TMR magnetic sensor 1041, and each alternating current electromagnetic field detection probe 104.

In some embodiments, the device for surface defect detection of a surfacing workpiece may further comprise a display screen 50 for displaying a detection report, the display screen 50 being connected to the FPGA.

Various embodiments in this specification are described in a progressive manner, with each embodiment focusing on the differences from other embodiments. For identical or similar parts between the various embodiments, mutual reference can be made. As for the device disclosed in the embodiments, since it corresponds to the method disclosed in the embodiments, the description is relatively brief. For relevant parts, reference can be made to the description in the method section.

Those skilled in the art may further appreciate that the units and algorithm steps of the examples described in conjunction with the embodiments disclosed herein can be implemented in electronic hardware, computer software, or a combination of both. To clearly illustrate the interchangeability of hardware and software, the composition and steps of each example have been generally described in terms of function in the foregoing description. Whether these functions are performed by hardware or software depends upon the particular application and design constraints of the technical solution. Skilled artisans may use different methods to implement the described functionality for each particular application, but such implementation should not be considered beyond the scope of the present invention.

The steps of the methods or algorithms described in connection with the embodiments disclosed herein may be implemented directly in hardware, in a software module executed by a processor, or in a combination of the two. The software module may reside in random access memory (RAM), internal memory, read-only memory (ROM), electrically programmable ROM, electrically erasable programmable ROM, registers, hard disk, removable disk, CD-ROM, or any other form of storage medium known in the technical field.

It is to be understood that the above embodiments only express the preferred implementation of the present invention, and the description thereof is relatively specific and detailed, but should not be construed as limiting the scope of the patent of the present invention. It should be pointed out that for those of ordinary skill in the art, without departing from the concept of the present invention, the aforementioned technical features can be freely combined, and several modifications and improvements can be made, all of which fall within the protection scope of the present invention. Therefore, any equivalent transformation and modification made within the scope of the claims of the present invention shall fall within the coverage of the claims of the present invention.

## Claims

1. A method for surface defect detection of surfacing workpieces based on FPGA, wherein by comprising:
acquiring a magnetic induction data matrix; wherein the magnetic induction data matrix comprises magnetic induction signals output by N alternating current electromagnetic field detection probes scanning the surface of the surfacing workpiece M times, N and M being positive integers;
performing lock-in amplification on the magnetic induction data matrix to obtain an original feature data matrix;
performing convolution filtering processing on the original feature data matrix to obtain a smoothed feature data matrix;
performing binarization processing on the smoothed feature data matrix to obtain a binarized data matrix;
determining whether a magnetic field distortion exists on the surface of the surfacing workpiece based on the binarized data matrix;
when a magnetic field distortion exists on the surface of the surfacing workpiece, determining whether the magnetic field distortion is caused by a workpiece surface defect, and outputting a detection report based on the determination result.

2. The method for surface defect detection of surfacing workpieces based on FPGA according to claim 1, wherein, the step of performing lock-in amplification on the magnetic induction data matrix comprises:
obtaining reference signal design parameters, wherein the reference signal design parameters include a reference signal amplitude and a reference signal angular frequency;
determining a first reference signal expression and a second reference signal expression based on the reference signal design parameters;
for each magnetic induction signal included in the magnetic induction data matrix, performing: calculating the product of the magnetic induction signal with the first reference signal expression and the second reference signal expression respectively, to obtain a first product expression and a second product expression; setting a cutoff frequency based on the excitation signal frequency of the alternating current field detection probe, to remove harmonic components and random noise components in the first product expression and the second product expression based on the cutoff frequency, thereby obtaining a first amplitude expression and a second amplitude expression; calculating a useful signal amplitude of the magnetic induction signal based on the first amplitude expression and the second amplitude expression;
the useful signal amplitudes collectively form the original feature data matrix.

3. The method for surface defect detection of surfacing workpieces based on FPGA according to claim 2, wherein, the first reference signal expression is: r₁ (t) = Vᵣsin(ωᵣt + τ), where r₁(t) represents the first reference signal, Vᵣ represents the reference signal amplitude, ωᵣ represents the reference signal angular frequency, t represents time, and τ represents the time shift;
the second reference signal expression is: r₂(t) = Vᵣcos(ωᵣt + τ), where r₂(t) represents the second reference signal;
the magnetic induction signal expression is: X(t) = Asin(ωt + φ) + N(t), where X(t) represents the magnetic induction signal, A represents the amplitude of the magnetic induction signal, ω represents the angular frequency of the magnetic induction signal, φ represents the initial phase angle, and N(t) represents random noise.

4. The method for surface defect detection of surfacing workpieces based on FPGA according to claim 3, wherein, the reference signal angular frequency is equal to the excitation signal frequency;
the step of setting a cutoff frequency based on the excitation signal frequency of the alternating current electromagnetic field detection probe comprises:
setting the cutoff frequency to a frequency greater than one time and less than two times the excitation signal frequency.

5. The method for surface defect detection of surfacing workpieces based on FPGA according to claim 2, wherein, the step of performing convolution filtering on the original feature data matrix comprises:
performing a matrix filtering operation on each useful signal amplitude included in the original feature data matrix based on a set convolution filter operator, to obtain a plurality of smoothed feature data corresponding one-to-one to each useful signal amplitude;
the smoothed feature data collectively constitute the smoothed feature data matrix;
wherein the set convolution filter operator is expressed as: $\frac{1}{16} \times \left[\begin{matrix}1 & 2 & 1 \\ 2 & 4 & 2 \\ 1 & 2 & 1\end{matrix}\right]$.

6. The method for surface defect detection of surfacing workpieces based on FPGA according to claim 5, wherein, the step of performing binarization processing on the smoothed feature data matrix comprises:
determining the ratio of the maximum smoothed feature data in the smoothed feature data matrix to a preset maximum value as a mapping ratio;
performing mapping processing on each smoothed feature data based on the mapping ratio to obtain a plurality of mapping values corresponding one-to-one to each smoothed feature data;
for each mapping value performing: determining whether the mapping value is greater than a set threshold, if yes, assigning a first set value to the mapping value, if not, assigning a second set value to the mapping value ;
recording each assigned mapping value as a binarized data;
the binarized data collectively forming the binarized data matrix.

7. The method for surface defect detection of surfacing workpieces based on FPGA according to claim 6, wherein, the step of performing binarization processing on the smoothed feature data matrix further comprises:
performing erosion and dilation processing on each binarized data, so as to form the binarized data matrix with the processed binarized data.

8. The method for surface defect detection of surfacing workpieces based on FPGA according to claim 7, wherein, the step of determining whether a magnetic field distortion exists based on the binarized data matrix comprises:
determining whether the binarized data matrix includes at least one binarized data with a first set value, and if so, determining that a magnetic field distortion exists.

9. The method for surface defect detection of surfacing workpieces based on FPGA according to claim 1, wherein, the step of determining whether the magnetic field distortion is caused by a workpiece surface defect comprises:
determining whether the magnetic field distortion is caused by a workpiece surface defect via a trained neural network module.

10. The method for surface defect detection of surfacing workpieces based on FPGA according to any one of claims 1 to 9, wherein, the step of outputting a detection report based on the determination result comprises:
when the magnetic field distortion is caused by a workpiece surface defect, mapping the smoothed feature data matrix to a color space to obtain a color magnetic field image of the surface of the surfacing workpiece surface;
determining the coordinates of a magnetic field distortion region in the binarized data matrix as the superposition coordinates for a pre-selection box;
superimposing the pre-selection box on the superposition coordinates of the color magnetic field image, and outputting the color magnetic field image with the superimposed pre-selection box.

11. The method for surface defect detection of surfacing workpieces based on FPGA according to claim 10, wherein, the step of mapping the smoothed feature data matrix to a color space comprises:
mapping each smoothed feature data included in the smoothed feature data matrix to the RGB channels in the color space based on a preset mapping function to obtain the color magnetic field image;
wherein the mapping function comprises a red mapping function, a green mapping function, and a blue mapping function: ${f}_{R} = \left\{\begin{matrix}\frac{1}{128} {x}^{2} , & 0 < x < 128 \\ - \frac{1}{32} {x}^{2} + 12 x - 896 , & 128 \leq x < 256\end{matrix}\right. ;$ ${f}_{G} = \left\{\begin{matrix}\frac{1}{32} {x}^{2} , & 0 < x < 64 \\ - \frac{1}{32} {x}^{2} + 8 x - 256 , & 64 \leq x < 192 \\ \frac{1}{32} {x}^{2} - 16 x + 2048 , & 192 \leq x < 256\end{matrix}\right. ;$ ${f}_{B} = \left\{\begin{matrix}- \frac{1}{32} {x}^{2} + 4 x + 128 , & 0 < x < 128 \\ \frac{1}{128} {x}^{2} - 4 x + 512 , & 128 \leq x < 256\end{matrix}\right. ;$
wherein, f_{R} denotes the red mapping function, f_{G} denotes the green mapping function, f_{B} denotes the blue mapping function, and x represents the smoothed feature data.

12. A device for surface defect detection of a surfacing workpiece, wherein, comprising an FPGA and N alternating current electromagnetic field detection probes (104);
each of the alternating current electromagnetic field detection probes (104) is configured to scan the surface of the surfacing workpiece M times and output a corresponding magnetic induction signal after each scan; N and M are positive integers;
the FPGA comprises a lock-in amplification module (402), a convolution filtering module (403), a binary morphological filtering module (405), and a determination module (410);
the lock-in amplification module (402) is configured to perform lock-in amplification on the magnetic induction signal output by each of the alternating current electromagnetic field detection probes (104) to output an original feature data matrix;
the convolution filtering module (403) is configured to perform convolution filtering processing on the original feature data matrix to output a smoothed feature data matrix;
the binary morphological filtering module (405) is configured to perform binarization processing on the smoothed feature data matrix to output a binarized data matrix;
the determination module (410) is configured to determine whether a magnetic field distortion exists based on the binarized data matrix, and when the magnetic field distortion exists, determine whether the magnetic field distortion is caused by a workpiece surface defect, so as to output a detection report based on the determination result.

13. The device for surface defect detection of a surfacing workpiece according to claim 12, wherein, the determination module (410) comprises a neural network module (407), a pseudo-color imaging module (404), and a pre-selection box processing module (406);
the neural network module (407) is configured to determine whether a magnetic field distortion exists based on the binarized data matrix, and after confirming the existence of the magnetic field distortion, determine whether the magnetic field distortion is caused by a workpiece surface defect;
the pseudo-color imaging module (404) is configured to, when the magnetic field distortion is caused by a workpiece surface defect, map the smoothed feature data matrix to a color space to output a color magnetic field image of the surface of the surfacing workpiece;
the pre-selection box processing module (406) is configured to determine coordinates of a magnetic field distortion region in the binarized data matrix as superposition coordinates for a pre-selection box, and, when the magnetic field distortion exists in the binarized data matrix, superimpose the pre-selection box onto the superposition coordinates of the color magnetic field image before the pseudo-color imaging module (404) outputs the color magnetic field image.

14. The device for surface defect detection of a surfacing workpiece according to claim 12 or 13, wherein, the FPGA further comprises a signal generation module (401) for outputting an excitation digital signal;
the device for surface defect detection of a surfacing workpiece further comprises a signal processing module (102), an interface module (106), an AD sampling module (20), a DA conversion module (30), and an excitation module (103);
the signal processing module (102) is connected to each of the alternating electromagnetic field detection probes (104) to amplify and filter the magnetic induction signals output by each of the alternating electromagnetic field detection probes (104);
the interface module (106) is connected to the signal processing module (102), the AD sampling module (20), the DA conversion module (30), and the excitation module (103) to transmit the amplified and filtered magnetic induction signals to the AD sampling module (20);
the AD sampling module (20) is connected to the lock-in amplification module (402) to convert a magnetic induction signal from the interface module (106) into a digital signal and transmit the converted magnetic induction signal to the lock-in amplification module (402);
the DA conversion module (30) is connected to the signal generation module (401) to convert the excitation digital signal into an analog signal and output the converted excitation digital signal to the interface module (106);
the excitation module (103) is configured to generate an excitation signal capable of driving each of the alternating current electromagnetic field detection probes (104) to operate based on the excitation digital signal from the interface module (106).

15. The device for surface defect detection of a surfacing workpiece according to claim 12 or 13, wherein, further comprises a TMR magnetic sensor (1041) for detecting the angle between the detection direction of each of the alternating current electromagnetic field detection probes (104) and the surface of the surfacing workpiece.
